# EUROPEAN PATENT SPECIFICATION

(11) **EP 1 261 455 B1**
(45) Date of publication and mention of the grant of the patent: **23.08.2006**
(21) Application number: 01923293.3
(22) Date of filing: 23.02.2001
(51) Int. Cl.: B24B 39/00

(54) **METHOD AND APPARATUS FOR PROVIDING A RESIDUAL STRESS DISTRIBUTION IN THE SURFACE OF A PART**
VERFAHREN UND VORRICHTUNG ZUM ERZEUGEN EINER RESTSPANNUNGVERTEILUNG IN DER OBERFLÄCHE EINES WERKSTÜCKES
PROCEDE ET DISPOSITIF ASSURANT UNE DISTRIBUTION DES CONTRAINTES RESIDUELLES SUR LA SURFACE D'UNE PIECE

(30) Priority: 01.03.2000 US 516328; 01.03.2000 US 516327
(43) Date of publication of application: 04.12.2002
(73) Proprietor: Lambda Research, Inc., Cincinnati, OH 45227-3465 (US)
(72) Inventor: PREVEY, Paul, S., III, Cincinnati, OH 45246 (US)
(74) Representative: James, Anthony Christopher W.P.
(86) International application number: PCT/US2001/040178
(87) International publication number: WO 2001/064398

(56) References cited:
- DE-A- 19 511 882
- US-A- 4 922 739
- US-A- 5 826 453

## Description

### Technical Field

This invention relates to a method and an apparatus for imparting residual stress in the surface of a part and, more particularly, to a method of inducing a selected compressive residual stress distribution within the surface of a part to improve fatigue and stress corrosion performance of the part and an apparatus for implementing the method.

### Background of the Invention

Surface residual stresses are known to have a major effect upon the fatigue and stress corrosion performance of component parts. Tensile residual stresses, which can develop during manufacturing processes such as grinding, turning, or welding are well known to reduce both fatigue life and increase sensitivity to corrosion-fatigue and stress corrosion cracking of the part. Further, many parts are subjected to high dynamic stresses or have areas where stress concentrations occur, such as blades and the rotor disks of turbo machinery, are prone to crack initiation and relatively rapid crack growth. The blades typically comprise an airfoil portion, a platform for partially defining a surface for fluid flow there over when the blade is mounted to the rotor disk, and a root portion having retention grooves which engage in corresponding axially extending complementary grooves of the disk. During engine operation, the rotor disk and the blade are subjected to large centrifugal loads that produce high dynamic stresses that may cause high cycle fatigue along portions of the rotor disk and the blade causing cracking and possible failure of the part. Further, the leading edge of the airfoil is often subjected to damage caused by the impact of foreign objects in the fluid stream. Such impact often results in cracks forming along the leading edge that may result in failure of the blade.

It is well known that compressive residual stresses induced in the surface of a part can increase fatigue life and reduce susceptibility to corrosion-fatigue and stress corrosion cracking. There are currently several methods used in industry for inducing compressive stress in the surface of a metal part and the particular method selected has been dependent on factors such as the dimensions and shape of the part, its strength and stiffness, the desired quality of the finished surface, the desired physical properties of the finished part, and the expense of performing the operation.

One method commonly used in industry to induce compressive stress in the surface of a part is shot peening, whereby a plurality of metallic or ceramic pellets are projected mechanically or through air pressure to impinge the surface of the part. While such a method is relatively inexpensive and is preferred for many applications, shot peening is unacceptable for parts requiring a superior finish or requiring a greater depth of compressive stress penetration and has also been found to be unacceptable for parts requiring localized or well defined compressive stress regions. Further, for parts such as a rotor disk for use in turbo machinery, the bore surfaces of the rotor disk are subjected to low levels of plastic strain (typically between about 0.2% to about 0.5%) when the rotor disk is accelerated to full speed. If the surfaces have been highly cold worked, such as during shot peening, the cold worked compressive surface material will not yield in tension while the lower yield strength interior material will yield during engine operation. On unloading, such as when the rotor speed is reduced, the surface is driven into tension and will remain in tension, reducing its fatigue life, for the remaining life of the component.

Another method commonly used in industry to induce compressive stress in the surface of a part is laser shock peening, whereby multiple radiation pulses from high power pulsed lasers produce shock waves on the surface of the part to produce a high magnitude localized compressive stress within a particular region. Unfortunately, however, laser shock peening is relatively expensive and time consuming making it unacceptable for many applications.

A method which have been developed and is widely used in industry to improve surface finish, fatigue life, and corrosion resistance by deforming the surface of a part is burnishing whereby a rotary or sliding burnishing member is pressed against the surface of the part in order to compress the microscopic peaks in the surface into adjacent hollows. Burnishing operates to develop compressive stresses within the part by yielding the surface in tension so that it returns to a state of compression following deformation. The burnishing apparatus utilized for working the surface of a part typically comprise a plurality of cylindrical rollers or balls which contact the surface of the part with sufficient pressure to induce a compressive stress therein. Unfortunately, sharp surface demarcation typically exists along the boundaries of the burnished area often resulting in tensile residual stresses being formed along such boundaries. As disclosed herein, it has been found that gradually reducing the pressure being exerted by the burnishing member to reduce the magnitude of compression at the boundaries will reduce the build up of tensile residual stress. Further, it has been found that by controlling the compressive residual stress distribution and the magnitude of compression, the tensile stress distributions within a part may be offset or distributed in such a manner as to optimize the fatigue and/or stress corrosion performance of the part. Until now, however, a method and apparatus have not been developed that permitted the residual stress distributions and the magnitude of compression to be controlled in such a manner as to optimize fatigue performance for a specific applied stress distribution.

Consequently, a need exists for a relatively inexpensive, relatively time efficient method and apparatus for implementing the method for improving the physical properties of a part by inducing a layer of compressive stress in the surface of the part, which is effective for use with complex shaped surfaces, and which permits the magnitude of compression and the residual stress distributions to be produced on a surface to achieve optimum fatigue performance and stress corrosion performance of the part.

### Disclosure of the Invention

The novel method of the present invention for inducing a layer of compressive residual stress along the surface of a part comprises the steps of claim 1.

Preferred embodiments include the features of the dependent claims.

A primary object of this invention is to provide a method and an apparatus for implementing the method of providing a part with an improved finish and with improved physical properties.

Another primary object of this invention is to provide a method and an apparatus for implementing the method of inducing a compressive stress layer on the surface of a part.

These and other objects and advantages of the invention will be apparent from the following description, the accompanying drawings and the appended claims.

### Brief Description of the Drawings

**FIG. 1** is a schematic block diagram illustrating a method not representing an embodiment of the present invention;
**FIG. 2** is a graph illustrating the predicted longitudinal residual stress distribution, following 2.1% plastic strain, of a part having been treated by the method of shot peening and a part having been treated by the method of burnishing;
**FIG. 3** is a graph illustrating the percent of cold work and yield strength distribution of a part having been treated by the method of shot peening and a part having been treated by the method of burnishing;
**FIG. 4** is a schematic view of a generally rectangular region being treated for inducing a desired residual stress distribution and magnitude of compression whereby a particular (raster) pattern is selected (**FIG. 4C**) and pressure is exerted (force normal to the surface) against the surface is varied in two directions (the x-direction **FIG. 4A** and the y-direction **FIG. 4B**);
**FIG. 5** is a schematic view of another region being treated by another method for inducing a desired residual stress distribution and magnitude of compression whereby the density (**FIG. 5A**) of the burnishing pattern (**FIG. 5B**)is varied in one direction;
**FIG. 6** is a schematic view of another region being treated by another method for inducing a desired residual stress distribution and magnitude of compression whereby the density of the burnishing pattern is varied in two directions;
**FIG. 7** is a schematic view of another region being treated by the method for inducing a desired residual stress distribution and magnitude of compression, such as around a bolt hole, whereby the pattern is a symmetrical pattern;
**FIG. 8** is a graph illustrating the residual stress distribution induced in the surface of a part in the direction of burnishing (parallel) and in the transverse direction (perpendicular);
**FIG. 9** is a graph illustrating the percent cold work distribution for the burnishing operation shown in **FIG. 8**;
**FIG. 10** is a diagrammatic view of the burnishing apparatus for implementing the method of the present invention;
**FIG. 11** is a diagrammatic view of the socket of a preferred embodiment of the burnishing apparatus for implementing the present invention showing magnetic means for maintaining the burnishing member within the socket;
**FIG. 12** is a bottom diagrammatic view of the socket of **FIG. 11** with the burnishing member removed;
**FIG. 13** is a diagrammatic view of the socket of **FIG. 11** showing the magnetic field lines for maintaining the burnishing member within the socket; and
**FIG. 14** is a partial perspective view of a blade and a rotor disk.

### Detailed Description of the Preferred Embodiment

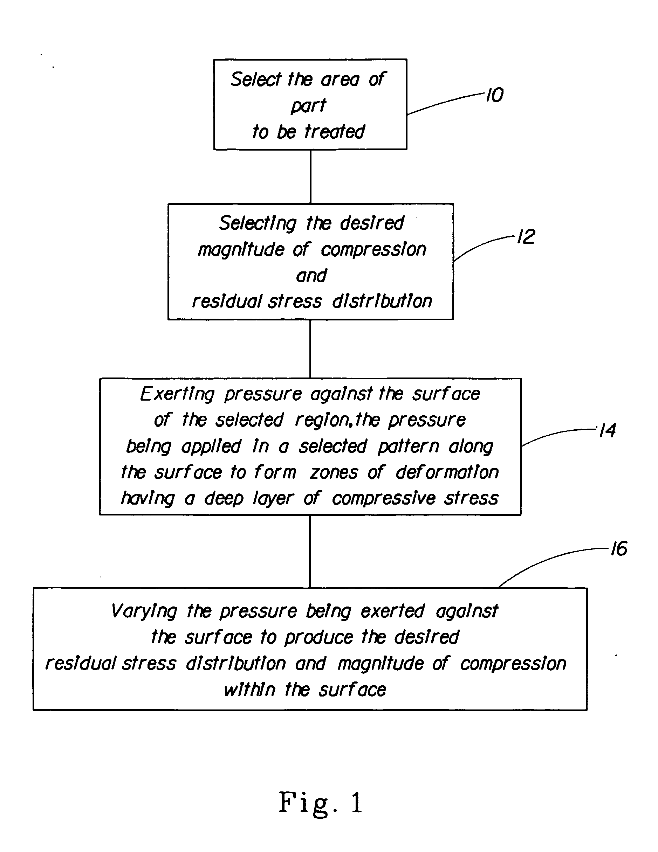

The present invention relates to a method and an apparatus for implementing the method of inducing a layer of compressive residual stress along the surface of a part according to claim 1. A conventional method as shown in **FIG. 1** comprises the steps of selecting a region of the part to be treated (block **10**); selecting the magnitude of compression and the residual stress distribution to be induced along the surface of the selected region (block **12**), such as for example by finite element analysis; and inducing a layer of compressive residual stress along the surface of the selected region having the desired magnitude of compression and stress distribution (block **14**).

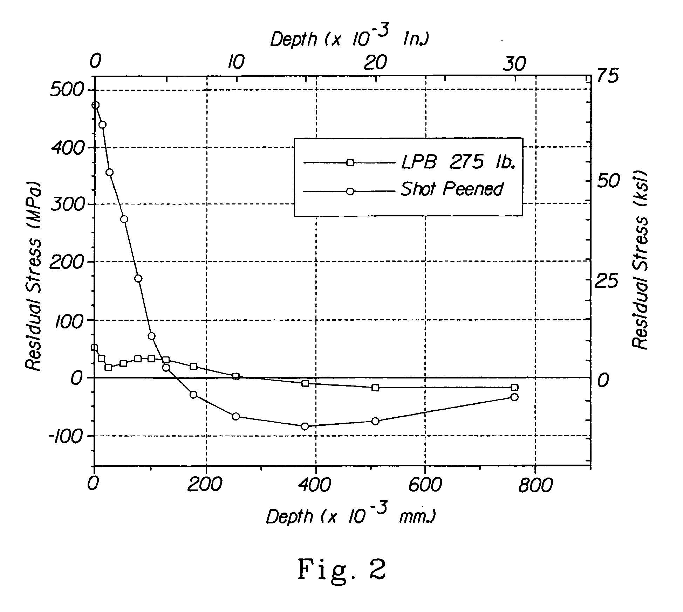

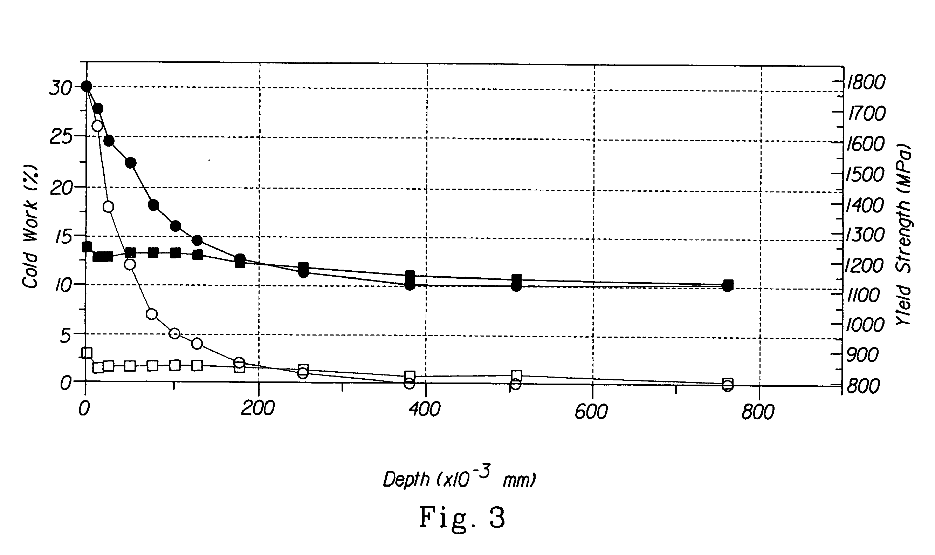

It has been found that for parts having a surface that has been substantially cold worked, such as a rotor disk for turbo machinery that has been treated by the process of shot peening, the cold worked compressive surface material will typically not yield in tension, such as during high speed operation, while the lower yield strength interior material will yield. On unloading of the part, such as when the speed of revolution of the rotor disk slows, the surface of the part is driven into tension and will remain in tension, reducing the fatigue life, throughout the parts remaining life. Referring to **FIG. 2**, the inversion into tension of a surface of a part having been treated by the method of shot peening is shown compared to a surface of a part having been treated by the method of burnishing, each having a 2.1% plastic strain single cycle. Referring to **FIG. 3,** the corresponding percent of cold work and yield strength distribution are shown. As illustrated, upon unloading, the part that underwent the method of shot peening may actually invert from compression into a relative high level of tension, if a yield strength gradient exists, thereby significantly reducing the fatigue life of the part.

Accordingly, it has been found that the preferred method for improving the surface finish, fatigue life, and stress corrosion resistance of a part is burnishing, whereby a rotary or sliding member is pressed against the surface of the part in order to compress the microscopic peaks in the surface into adjacent hollows. Such compression develops compressive stresses within the part by yielding the surface in tension so that it returns to a state of compression following deformation. As shown in U.S. Patent No. 5,826,453, by the same inventor, by cold working the surface less than about 3.5% and preferably less than about 2.0%, results in layer retention of compressive residual stress at elevated temperature, less rapid relaxation under cyclic loading, and minimizes the alteration of the residual stress field during tensile or compressive overload than conventional cold working and surface hardening processes. Accordingly, the method of the present invention preferably utilizes the process of burnishing to provide deep compression with a minimal amount of cold working and surface hardening. In particular, the region to be burnished along the surface of the part is first defined (block **10**) and a burnishing apparatus having a single-point of contact burnishing member is pressed against the surface of the part to create a zone of deformation producing a relatively deep layer of compression within the surface (block **14**). The burnishing member is then passed in a predetermined pattern across the region. Preferably, the pattern of burnishing is such that the zones of deformation formed by each pass of the burnishing member do not overlap. As disclosed in U.S. Patent No. 5,826,453, applying a single-pass, or multiple passes having a reduced compressive pressure, produces compressive residual stresses following tensile deformation of the surface having deep compression with minimal cold working.

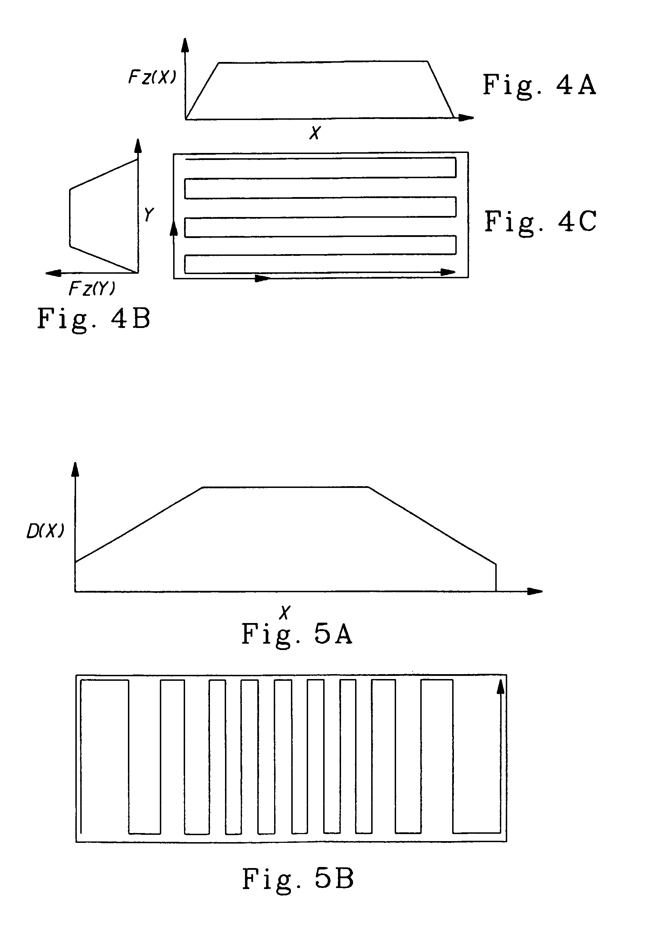

For illustration, as shown in **FIGS. 4A, 4B** and **4C,** a rectangular burnishing region is selected and the burnishing member is pressed against the surface the part in a particular (raster) pattern (**FIG. 4C)**, as shown by the arrow indicating the path of the burnishing member. Conventionally, the normal force (Fz) being applied to the burnishing member is varied to increase or decrease the pressure being exerted against the surface of the part. While **FIG. 4** shows a linear variation in the normal force and the corresponding pressure being applied against the surface, parallel (X-direction) **FIG. 4A** and perpendicular (Y-direction) **FIG. 4B** to the direction of burnishing, it should now be apparent to those skilled in the art that the pattern of burnishing and the form and rate of reduction or increase in pressure being exerted against the surface can be controlled to provide a wide variety of residual stress distributions and magnitude of compression.

Referring to **FIG. 5,** another illustration of a method not representing an embodiment of the present invention is shown whereby variations in residual stress distribution may also be achieved by varying the pattern of burnishing, independently or in conjunction with variations in burnishing pressure. As shown, the spacing along the X-direction, perpendicular to the direction of travel of the burnishing member, has been varied to increase and decrease the spacing between each pass of the burnishing member thereby changing the density (Dx) of burnishing. As shown, the spacing between each pass of the burnishing member varies linearly, however, it should now be apparent to those skilled in the art that other burnishing patterns may be selected to produce a desired residual stress distribution.

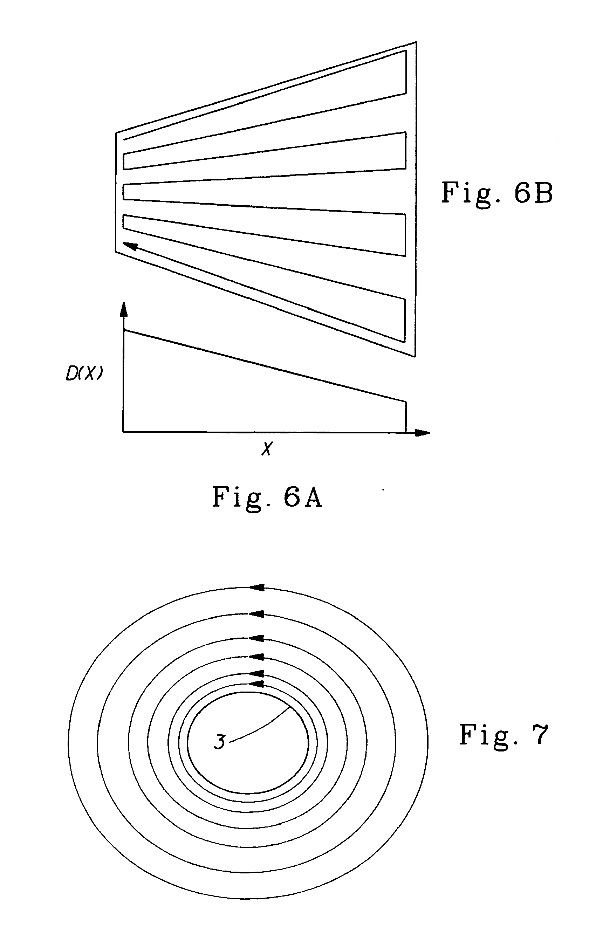

Referring to **FIG. 6**, another pattern of burnishing is shown whereby the spacing density (Dx) is varied in two dimensions (X and Y directions) as a function of the length of the burnishing pass, in order to produce the desired stress distribution for the part being burnished.

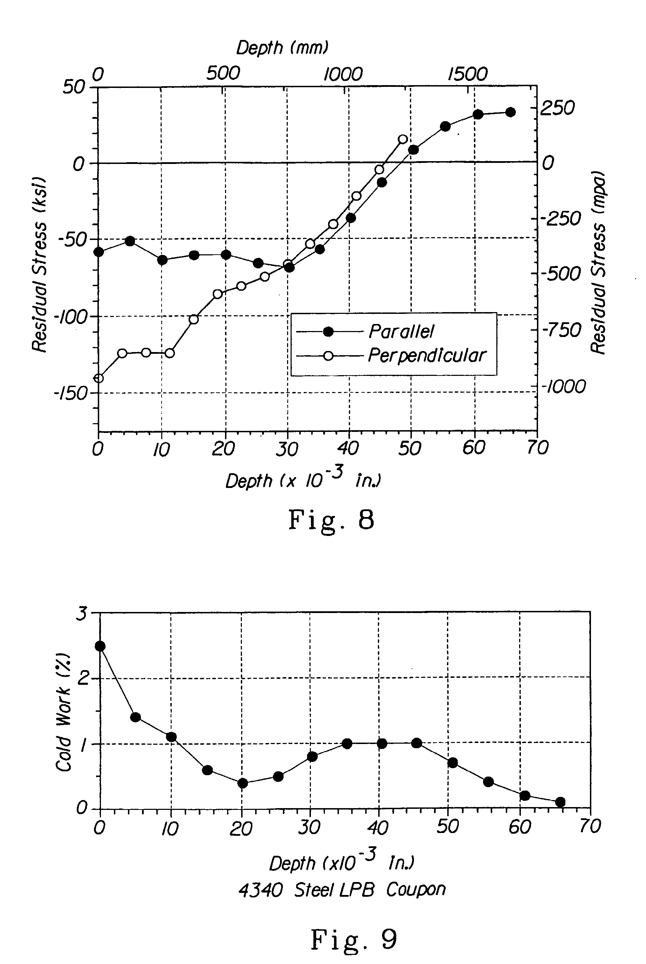

Referring to **FIG. 7,** another pattern of conventional burnishing is shown whereby a region is designated and the magnitude of compression and the residual stress distribution is selected that optimizes the fatigue performance of the part. As shown, the residual stress distribution has a symmetrical pattern such as what would be preferred for use around bolt holes or for "feathering" in a state of compressive stress in the fillet area of a rotor disk. It should now be apparent to those skilled in the art that the burnishing pressure, the density of burnishing, and the pattern of burnishing can be varied to produce a desired residual stress distribution and magnitude of compression for a part for a specific engineering application.

Another method of inducing a layer of compressive residual stress along the surface of a part includes the step of using a secondary process, such as shot peening, grit blasting, tumbling or other similar abrasive impact processes to induce a shallow layer of compressive residual stress near the surface of the part following burnishing. As shown in **FIGS. 8** and **9**, burnishing of a surface inherently produces a Hertzian loading of the surface resulting in maximum compression beneath the surface of the work piece. The residual stress at the surface can be near zero or even tensile, and is a function of the direction of the burnishing operation. The surface residual stress is typically less compressive in the direction of burnishing (parallel) than the transverse direction (perpendicular) due to the effect of displacement of material laterally during passage of the burnishing member. The presence of lower compression at the surface has been found to allow the initiation of fatigue cracks at the surface of the part. Although these cracks are arrested as they propagate deeper into the more highly compressive material, the presence of surface cracks and the stress intensity factor associated with them is highly undesirable.

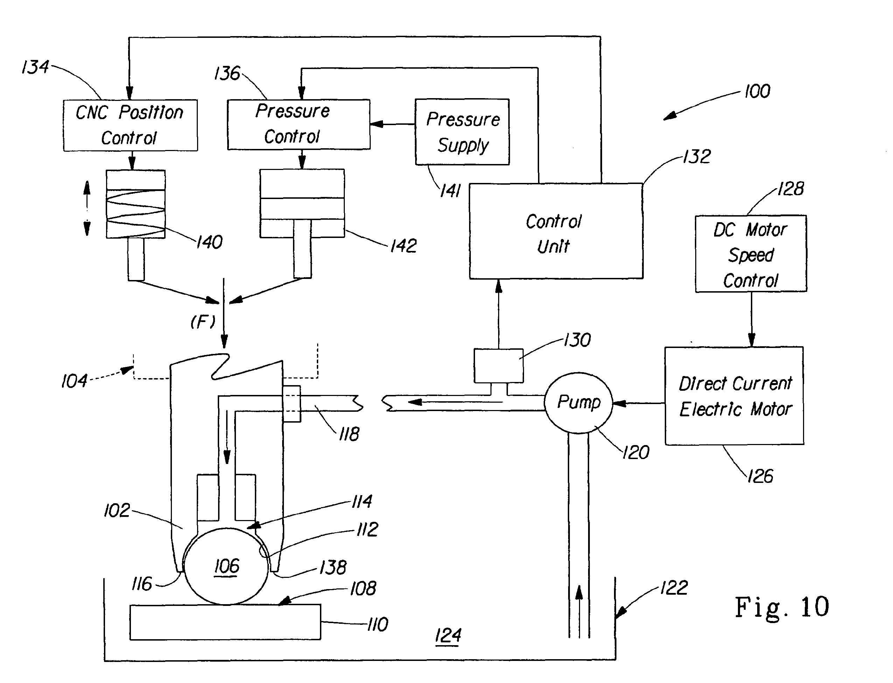

Referring to **FIG. 10,** a preferred embodiment of the burnishing apparatus **100** for implementing the burnishing method of the subject invention is shown comprising a generally cylindrical socket **102** which conventionally mounts to a support **104** of any particular description typically used for supporting burnishing tools which is attached to a conventional machine tool fixture (not shown). The support **104** is coupled to the socket **102** and provides means for imparting a normal force **F** to a burnishing member **106** to effect the proper burnishing pressure sufficient to deform the surface **108** of the part **110.**

The socket **102** includes a seat **112** adapted to the surface of the burnishing member **106** which is disposed within the seat **112,** and an inner chamber **114.** The size of the seat **112** is determined by the size and shape of the burnishing member **106** and is selected to provide a small clearance **116** between the seat **112** and the burnishing member **106.** As shown, the support **104,** in cooperation with the machine tool fixture, is adapted for controlling the movement of the socket **102** and includes means for forcing the socket **102** and the burnishing member **106** against the surface **108** of the part **110** being burnished. Without departing from the invention, it should now be apparent to those skilled in the art that various apparatus may be constructed to allow the socket to be moved to various positions or to allow the part being treated to rotate or pass in contact with the burnishing member in such a way that the selected region is burnished using the method of the present invention.

The socket **102** is further provided with a fluid passage **118** in flow communication with the seat **112** and extends from the seat **112** through the inner chamber **114** to a fitting (not shown) for connecting to a positive displacement pump **120** for providing a constant volumetric flow of fluid from a fluid supply **122** to the seat **112.** The fluid supply **122** may be an external supply (not shown) or may be in the form of a sump **124,** as shown, thereby forming a closed-loop fluid system. The positive displacement pump **120** is preferably coupled to a direct current (DC) electric motor **126** and a fast acting motor speed control **128.** The motor speed control **128** functions to maintain a constant angular velocity of the motor **126** to sustain the constant volumetric fluid flow to the socket **102** regardless of any changes in fluid pressure. A pressure sensor **130,** such as a pressure transducer, is connected to the fluid passage **118** for monitoring fluid pressure and is coupled to a control unit **132,** such as a computer or a numerical controller, which is also coupled to either a position regulator **134,** such as a spring, or a pressure regulator **136,** such as a hydraulic or pneumatic system, that operate with the burnishing member **106** to provide the proper burnishing pressure being exerted against the surface **108** of the part **110.**

To understand how the elements described are interrelated, the operation of the burnishing apparatus **100** will now be described. During operation, fluid, such as lubricating fluid, is fed under pressure from the fluid supply **122** by use of the positive displacement pump **120** through the fluid passage **118** and into the inner chamber **114.** The fluid in the inner chamber **114** is then fed under pressure around the burnishing member **106** through clearance **116** to force the burnishing member **106** outwardly. The lubricating fluid flows around the outer surface of the burnishing member **106** to permit the burnishing member **106** to float continuously upon a thin film of fluid. The socket **102** is then advanced towards the surface **108** of the part **110** by operation of the support and the machine tool fixture (not shown) until the forward most portion of the burnishing member **106** makes contact with the surface **108.** By further adjusting the speed of the motor, a desired amount of lubrication fluid will flow around the burnishing member **106** and be transferred onto the surface **108** of the part **110** to provide the desired lubrication and cooling for the burnishing operation. During burnishing, the further most portion of the burnishing member **106** contacts the surface **108** of the part **110** causing the burnishing member **106** to move inwardly into the socket **102** thereby reducing the clearance **116** between the burnishing member **106** and the socket **102** thereby increasing the pressure of the fluid in the fluid passage **118.** The increase in fluid pressure is detected by the pressure sensor **130** which is coupled to the control unit **132** that functions to adjust the force **F** being applied to the burnishing member **106** to maintain a constant or controlled variable burnishing pressure against the surface **108.** It should now be apparent to those skilled in the art that the constant flow burnishing apparatus **100** of the present invention, unlike conventional constant pressure burnishing apparatus that follow the surface topography of the part, automatically increases the force **F** being applied to the burnishing member **106,** and the corresponding pressure being exerted against the surface **108,** on high points and decreases on low points along the surface **108.** Accordingly, the pressure of the compressive force exerted on the surface **108** of the part **110** by the burnishing member **106** can be precisely regulated to provide optimum surface finish and uniform burnishing of the part.

In a preferred embodiment of the invention, the proper pressure or compressive force to be applied to the surface **108** of the part **110** during the burnishing operation is provided by using the position regulator **134** whereby the force **F** being applied to the burnishing member **106** is a function of the position of the socket **102.** As shown, the position regulator **134** includes a spring means **140,** such as a coil spring, deflection members, or Belleville washers, having a known spring characteristic, which compresses or expands axially to apply a given normal force **F** to the burnishing member **106.** Because the burnishing member **106** is coupled through the spring means **140,** the force **F** being applied to the burnishing member **106** and the resulting pressure being exerted on the surface **108** of the part **110** can be accurately controlled by positioning (moving) the socket **102** using the conventional machine tool fixture (not shown). The control unit **132** operates with a feed back signal from the pressure sensor **130** to achieve closed loop control of the force **F** and the corresponding pressure being exerted on the surface by the burnishing member **106.**

Preferably the machine tool fixture supporting the socket **102** is a "three-axis" machine that provides for linear motion along mutually othogonal axis of a fixed coordinate system.

It should now be apparent to those skilled in the art that by using a programmable control unit **132** which is configured to continuously track the position of the burnishing member **106,** the socket **102** can be accurately positioned and moved in a selected pattern. Further, in combination with passing the burnishing member is a selected pattern across the surface of the part, the pressure being exerted against the surface may be varied to obtain a region having the desired residual stress distribution and magnitude of compression.

Conventional constant pressure burnishing apparatus require a containment means, such as end caps, for maintaining the burnishing member within the apparatus. The containment means must be capable of withstanding high pressure and forces, including the time when the burnishing member is not in contact with the surface of the part. In the event that the containment means fails, the burnishing member could be propelled from the burnishing apparatus at high velocity. In contrast, the constant flow burnishing apparatus of the subject invention eliminates the need of a containment means that is capable of withstanding high pressure.

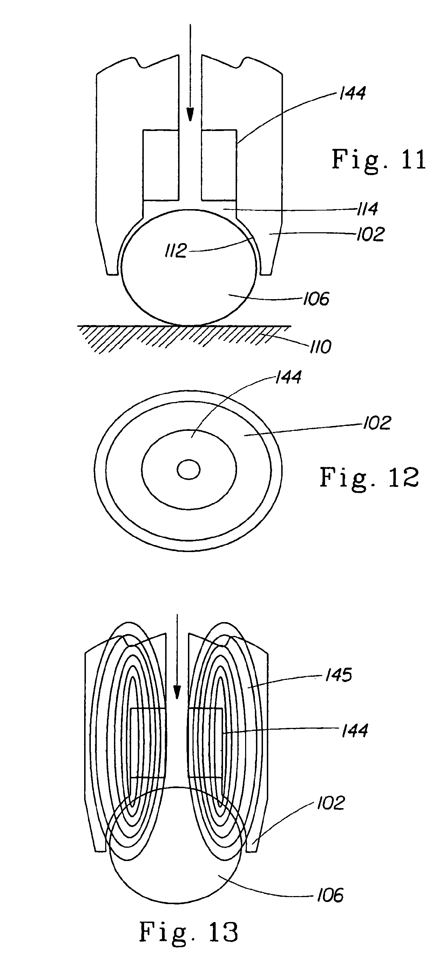

Referring to **FIGS. 11, 12** and **13,** the burnishing member **106** may be selected from various materials having a higher yield strength than the part **110** being burnished and having a relatively high elastic modules to allow maximal deformation of the part **110.** In a preferred embodiment of the invention, the burnishing member **106** is formed from a high carbon steel or a sintered tungsten carbide containing a portion of a cobalt binder. The inner chamber **114** of the socket **102** is shown having a magnetic means **144,** such as a permanent magnet or an electric magnet or the like, which produce magnetic flux **145 (FIG.13)** that functions to maintain the burnishing member **106** within the seat **112.** It has been found that forming the socket **102** from a ferromagnetic alloy, such as a martensitic stainless steel AISI 440C, the socket **102** functions as a pole piece thereby increasing the holding power of the magnet means **144.** Because the bearing member **106** is supported by a low volume of fluid having a constant flow rate, the bearing member **106** will be retained within the socket **102** even while the fluid is flowing and the socket **102** is being repositioned or moved out of contact with the surface **108** of the part **110** and the socket **102** is being repositioned or moved out of contact with the surface **108** of the part **110.**

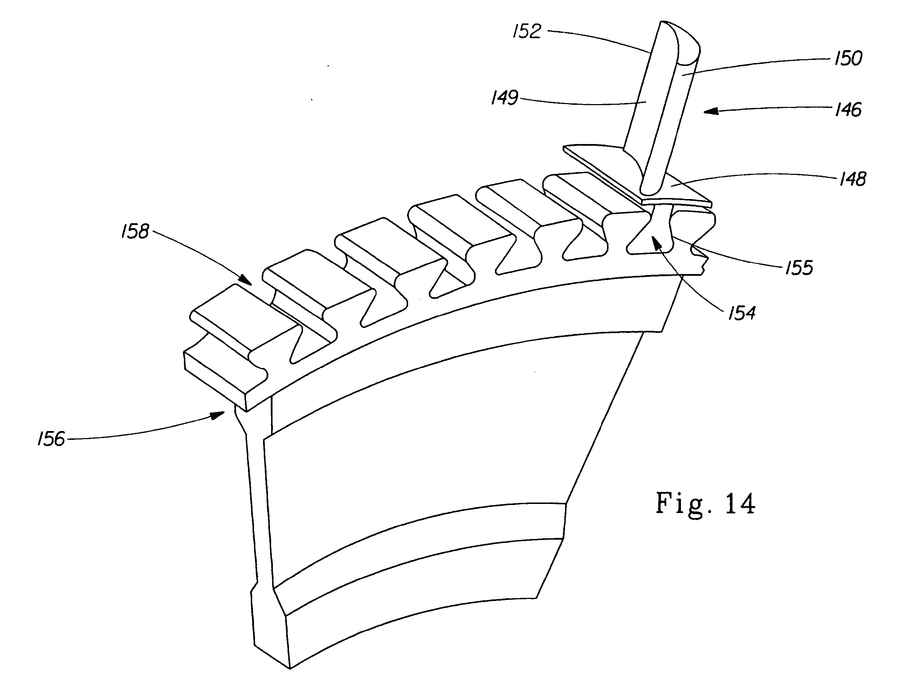

Referring to **FIG. 14,** a blade is shown, for use in turbo machinery. The blade **146** includes a generally rectangular platform **148,** an elongated airfoil **149** having a leading edge **150** and a trailing edge **152,** the airfoil **149** being rigidly attached to and extending radially outwardly from the platform **148** and a root **154** rigidly connected to and extending radially inwardly from the platform **148** having a dovetail portion **155** for mounting to a rotor disk **156.** As used herein, the term "outwardly" refers to the direction away from the center of rotation of the blade and rotor disk and the term "inwardly" refers to the direction towards the center of rotation of the blade and rotor disk. The rotor disk **156** includes a plurality of circumferentially spaced axially disposed slots **158** therein. The blade **146** is attached to the rotor disk **156** by inserting the root **154** into a slot **158.** As shown, the root **154** and the slot **158** have complementing surfaces for securing the blade **146** to the rotor disk **156.** During operation, the rotor disk **156** and the attached blades **146** are subjected to high centrifugal loads that produce high dynamic stresses that may cause high cycle fatigue along portions of the rotor disk **156** and each blade **146.** Further, the leading edge **150** of the blade **146** is often subjected to damage by the impact of foreign objects in the fluid stream.

In a preferred embodiment of the invention, a part is selected from the group comprising automotive parts, aircraft parts, marine parts, engine parts, motor parts, machine parts, drilling parts, construction parts, pump parts.

The method and apparatus for implementing the method of the subject invention utilizes a burnishing method that produces cold work and surface work hardening far less than either conventional shot peening, gravity peening, and conventional burnishing or deep rolling methods. The increase in residual compressive stress with minimal cold work developed by the subject invention penetrates to a greater depth than most conventional methods, such as shot peening and results in longer retention of compressive residual stress at elevated temperature, less rapid relaxation under cyclic loading, and minimizes the alteration of the residual stress field during tensile or compressive overload than conventional cold working and surface hardening processes. By controlling the pattern of burnishing and by gradually reducing the magnitude of compression near the boundaries of the regions being burnished ("feathering"), the tensile zones which occur immediately adjacent and parallel to the boundaries may be reduced or eliminated.

According, the method and apparatus for implementing the method of the subject invention provides a relatively inexpensive and effective means of providing a compression force on a work piece to induce compressive residual stress in a well defined localized region of a simple or complex part surface configuration with a minimum of cold working and surface hardening. By minimizing the amount of cold working and surface hardening, the method of the subject invention produces longer retention of compressive residual stress at elevated temperature, less relaxation under cyclic loading, and minimizes the alteration of the residual stress field during tensile or compressive overload. Further, the method and the apparatus of the invention for inducing a layer of compressive residual stress along the surface of the part permits a variety of burnishing patterns to be designated to produce regions of residual stress that are appropriate for a specific engineering application. In addition, a part treated using the method of the invention has improved stress corrosion cracking resistance.

While the method and apparatus described constitute preferred embodiments of the invention, it is to be understand that the invention is defined in the appended claims.

## Claims

1. A method of inducing a deep layer of compression within the surface of a part (110) comprising the steps of:
defining a surface region on the surface of the part (110) for receiving compressive stress; and
performing a burnishing operation to produce a zone of deformation within the surface of the part (110) having associated cold working of less than 3.5 percent,
wherein the burnishing operation is performed with a burnishing apparatus (100) comprising a member (106) for exerting pressure against the surface of the defined surface region and a socket (102) for receiving the member (106),
**characterised by** supplying a constant volume flow of fluid to the socket (102) such that the fluid supports the member (106).

2. The method of Claim 1, further comprising the step of selecting the magnitude of compression to be induced along the surface of the defined region.

3. The method of claim 2, wherein the step of selecting the magnitude of compression includes the step of programming a control unit to automatically adjust the magnitude of compression being induced within the surface of the part (110).

4. The method of any one of Claims 1 to 3 wherein the pressure increases on the high points and decreases on the low points encountered by the burnishing member (106) along the surface of the part (110).

5. The method of any one of Claims 1 to 4 further comprising the step of inducing a more shallow layer of compressive stress within the surface of the part (110).

6. The method of any one of Claims 1 to 5 wherein the step of removing a layer of material comprises removing a layer of material being in low compression or tension along the surface of the part (110).

7. The method of any one of Claims 1 to 6 wherein the part (110) is selected from the group consisting of automotive parts (110), aircraft parts (110), marine parts (110), engine parts (110), motor parts (110), machine parts (110), drilling parts (110), construction parts (110), pump parts (110), and parts (110) for turbo-machinery.

## Patentansprüche

1. Verfahren zum Induzieren einer tiefen bzw. tiefliegenden Kompressionsschicht innerhalb der Oberfläche eines Teils (110), umfassend die Schritte:
Definieren eines Oberflächenbereichs auf der Oberfläche bzw. Fläche des Teils (110), um eine Druckspannung bzw. -beanspruchung aufzunehmen; und
Ausführen einer Feinwalz- bzw. Glattwalz- bzw. Poliertätigkeit, um eine Deformationszone innerhalb der Oberfläche des Teils (110) zu erzeugen, das ein Kaltbearbeiten von weniger als 3,5 Prozent assoziiert aufweist,
wobei die Feinwalztätigkeit mit einer Polier- bzw. Feinwalzvorrichtung (100) durchgeführt wird, die ein Glied (106) zum Ausüben von Druck gegen die Oberfläche des definierten Oberflächenbereichs und eine Buchse bzw. Muffe (102) zum Aufnehmen des Glieds (106) umfaßt,
**gekennzeichnet durch** ein Zuführen eines konstanten Volumenstroms von Fluid zu der Buchse (102), so daß das Fluid das Glied (106) unterstützt.

2. Verfahren nach Anspruch 1, weiterhin umfassend den Schritt eines Auswählens der Größe des Drucks bzw. der Kompression, der bzw. die entlang der Oberfläche des definierten Bereichs einzubringen ist.

3. Verfahren nach Anspruch 2, wobei der Schritt eines Auswählens der Größe des Drucks den Schritt eines Programmierens einer Steuer- bzw. Regeleinheit beinhaltet, um automatisch die Größe des Drucks einzustellen, der in der Oberfläche bzw. Fläche des Teils (110) induziert wird.

4. Verfahren nach einem der Ansprüche 1 bis 3, wobei der Druck an den hohen Punkten ansteigt und an den niedrigen Punkten absinkt, die durch das Feinwalzglied (106) entlang der Oberfläche des Teils (110) angetroffen werden.

5. Verfahren nach einem der Ansprüche 1 bis 4, weiterhin umfassend den Schritt eines Induzierens einer seichteren Schicht von Druckspannung innerhalb der Oberfläche des Teils (110).

6. Verfahren nach einem der Ansprüche 1 bis 5, wobei der Schritt eines Entfernens einer Schicht von Material ein Entfernen einer Schicht von Material umfaßt, das in einer Kompression oder Spannung entlang der Oberfläche des Teils (110) ist.

7. Verfahren nach einem der Ansprüche 1 bis 6, wobei das Teil (110) aus der Gruppe, bestehend aus Autoteilen (110), Flugzeugteilen (110), Schiffteilen (110), Verbrennungskraftmaschinenteilen (110), Maschinenteilen (110), Motorteilen (110), Bohrteilen (110), Konstruktionsteilen (110), Pumpenteilen (110) und Teilen (110) für Turbomaschinen gewählt sind.

## Revendications

1. Procédé pour produire une couche profonde de compression dans la surface d'une pièce (110) comprenant les étapes de :
définir une région de surface sur la surface de la pièce (110) pour recevoir une contrainte de compression ; et
réaliser une opération de polissage pour produire une zone de déformation dans la surface de la pièce (110) ayant un travail à froid associé inférieur à 3,5 %,
dans lequel l'opération de polissage est réalisée avec un dispositif de polissage (100) comprenant un élément (106) pour exercer une pression contre la surface de la région de surface définie et une douille (102) pour recevoir l'élément (106),
**caractérisé par** l'amenée d'un écoulement de fluide de volume constant à la douille (102) de sorte que le fluide supporte l'élément (106).

2. Procédé selon la revendication 1, comprenant, en outre, l'étape de choisir l'amplitude de la compression devant être produite le long de la surface de la région définie.

3. Procédé selon la revendication 2, dans lequel l'étape de sélection de la grandeur de la compression comprend l'étape de programmation d'une unité de commande pour ajuster automatiquement la grandeur de la compression produite dans la surface de la pièce (110).

4. Procédé selon l'une quelconque des revendications 1 à 3, dans lequel la pression augmente sur les points élevés et diminue sur les points bas rencontrés par l'élément de polissage (106) le long de la surface de la pièce (110).

5. Procédé selon l'une quelconque des revendications 1 à 4, comprenant, en outre, l'étape de produire une couche davantage peu profonde de contrainte de compression dans la surface de la pièce (110),

6. Procédé selon l'une quelconque des revendications 1 à 5, dans lequel l'étape d'élimination d'une couche de matériau comprend l'élimination d'une couche de matériau qui est sous une tension ou compression faible le long de la surface de la pièce (110).

7. Procédé selon l'une quelconque des revendications 1 à 6, dans lequel la pièce (110) est choisie dans le groupe comprenant les pièces d'automobiles (110), les pièces d'aéronefs (110), les pièces d'engins de marine (110), les parties de moteurs (110), les pièces de machines (110), les parties de forage (110), les pièces de construction (110), les pièces de pompe (110) et les pièces (110) pour turbomachines.
